# EUROPÄISCHE PATENTSCHRIFT

(11) **EP 3 434 384 B1**
(45) Veröffentlichungstag und Bekanntmachung des Hinweises auf die Patenterteilung: **07.09.2022**
(21) Anmeldenummer: 17182960.9
(22) Anmeldetag: 25.07.2017
(51) Int. Cl.: B21D 22/00, B21D 28/00, B21D 43/22, B65G 57/00

(54) **VERFAHREN ZUR AUFBEREITUNG VON WERKSTÜCKEN FÜR EIN AUTOMATISIERTES ABSTAPELN**
METHOD FOR THE PREPARATION OF WORKPIECES FOR AUTOMATED STACKING
PROCÉDÉ DE PRÉPARATION DE PIÈCES DE TRAVAIL POUR UN EMPILAGE AUTOMATIQUE

(43) Veröffentlichungstag der Anmeldung: 30.01.2019
(73) Patentinhaber: TRUMPF Werkzeugmaschinen GmbH + Co. KG, 71254 Ditzingen (DE)
(72) Erfinder: WILHELM, Markus, 70839 Gerlingen (DE); TATARCZYK, Alexander, 71229 Leonberg (DE); KAPPES, Jens, 70771 Leinfelden-Echterdingen (DE)
(74) Vertreter: Patentanwälte Mammel und Maser PartG mbB

(56) Entgegenhaltungen:
- DE-A1- 10 142 000
- FR-A1- 3 010 710
- JP-A- H05 154 589
- JP-A- S58 109 326

## Beschreibung

**Verfahren zur Aufbereitung von Werkstücken für ein automatisiertes Abstapeln**

Die Erfindung betrifft ein Verfahren zur Aufbereitung von Werkstücken aus einem plattenförmigen Material, insbesondere Blechen, für ein automatisiertes Abstapeln nach dem Bearbeiten und der Entnahme der Werkstücke aus einer Werkstückauflage einer Bearbeitungsmaschine.

Aus der JP S 58 109326 A , auf welche der Oberbegriff des Anspruchs 1 basiert, ist ein Verfahren zur Aufbereitung von Werkstücken aus einem plattenförmigen Material für ein automatisches Abstapeln nach dem Bearbeiten und der Entnahme der Werkstücke aus einer Werkstückauflage einer Bearbeitungsmaschine bekannt.

Aus der DE 101 42 000 A1 sind Distanzelemente für einen zu stapelnden Gegenstand bekannt. Diese Distanzelemente sind an der Oberseite und oder Unterseite vorgesehen und können fest mit dem zu stapelnden Gegenstand verbunden sein oder durch eine Verformung des zu stapelnden Gegenstandes ausgebildet werden.

Aus der JP H05 154589 A sind plattenförmige Werkstücke bekannt, in welche gleichzeitig mit der Herstellung von verformten Bauteilen Abstapelemente eingeformt werden, damit die plattenförmigen Werkstücke übereinander stapelbar sind.

Aus der FR 3 010 710 A ist die Herstellung eines verformten plattenförmigen Werkstücks als Karosserieteil bekannt. Während des Verformungsvorgangs des plattenförmigen Werkstücks wird ein Abstapelelement angeformt.

Aus der US 2003/0127440 A1 ist eine Laserbearbeitungsanlage mit einer Laserbearbeitungsmaschine zum Bearbeiten von Werkstücken aus einem plattenförmigen Material bekannt. Ein plattenförmiges Rohmaterial wird auf einer Werkstückauflage aufgelegt. Darauffolgend wird das plattenförmige Rohmaterial durch Laserschneiden bearbeitet. Nach der Herstellung der Werkstücke wird eine Handlingseinrichtung oberhalb der Werkstückauflage positioniert. Die Handlingseinrichtung greift das bearbeitete Werkstück und entnimmt dieses von der Werkstückauflage. Anschließend werden die Werkstücke auf einem Sammeltisch abgelegt und übereinander gestapelt. Dabei weisen die Werkstücke über deren gesamte flächige Erstreckung eine gleiche Dicke auf, welche der Plattenstärke der Werkstücke entspricht.

Die Anforderungen an die Bearbeitung von Werkstücken steigen. Beispielsweise werden Laschen ausgebildet, welche gegenüber der Werkstückebene hervorstehen. Des Weiteren können beispielsweise Erhöhungen oder Vertiefungen in das plattenförmige Material eingebracht werden. Auch können zusätzlich erhabene Funktionselemente für die weitere Montage des Werkstückes mit einem oder mehreren weiteren Bauteilen angebracht werden. Dies können beispielsweise auf ein plattenförmiges Werkstück aufgebrachte Schweißbolzen sein.

Solche Werkstücke können bislang nicht platzsparend übereinander gestapelt werden, sondern erfordern einen erheblichen Platzbedarf für einen Abstapelbereich oder in einem Magazin/Depot, da solche Werkstücke nur einlagig nebeneinander abgelegt werden können.

Der Erfindung liegt die Aufgabe zugrunde, ein Verfahren zur Aufbereitung von Werkstücken aus einem plattenförmigen Material, insbesondere Blech, für ein automatisiertes Abstapeln bereitzustellen, bei welchem Werkstücke mit einer unebenen Oberfläche und/oder zusätzlich daran angebrachten Funktionselementen mehrlagig übereinander abgestapelt werden können.

Diese Aufgabe wird durch ein Verfahren zur Aufbereitung von Werkstücken aus einem plattenförmigen Material, insbesondere Blech, für ein automatisiertes Abstapeln gelöst, bei welchem an dem bearbeiteten Werkstück zumindest ein zusätzliches Abstapelelement angebracht wird, durch welches die Werkstückteile übereinander stapelbar sind. Durch die Anbringung zumindest eines zusätzlichen Abstapelelementes an dem bearbeiteten Werkstück kann ein Verkippen oder ein Verrutschen der übereinander gestapelten Werkstücke verhindert werden. Dadurch kann zumindest für einen Zeitraum während des Abstapelns und für die Dauer der Lagerung eine Ausrichtung von mehreren Lagen von Werkstücken zueinander gewährleistet sein. Des Weiteren können die einzelnen Funktionselemente oder konstruktive Gestaltungselemente des Werkstücks ohne Anpassung an eine Eignung für eine mögliche Stapelbarkeit ausgeführt werden.

Sofern die Stapelbarkeit des Werkstückes nicht mehr erforderlich ist, kann das zusätzlich angebrachte Abstapelelement wieder entfernt werden. Durch die temporäre Anbringung des zusätzlichen Abstapelelementes kann somit eine Stapelbarkeit erzielt werden, welche jedoch nur so lange aufrechterhalten bleibt, wie dies für den Bearbeitungsprozess der Werkstücke erforderlich ist.

Bevorzugt wird an dem Werkstück, welches inhomogen daran angebrachte oder angeformte Funktionselemente aufweist, die gegenüber der Werkstückebene erhaben sind, das zumindest eine Abstapelelement auf dem Werkstück aufgebracht oder an das Werkstück angrenzend angebracht. Dadurch kann ein Verkippen von solchen Werkstücken beim Übereinanderstapeln verhindert werden. Beispielsweise ist bei einem plattenförmigen Werkstück, welches entlang einer Seitenkante zwei gegenüber der Werkstückebene erhabene Funktionselemente aufweist, wie beispielsweise Schweißbolzen und/oder Gewindebolzen, entfernt dazu zumindest ein weiteres Abstapelelement auf dem Werkstück aufgebracht, sodass eine Dreipunkt- oder Mehrpunktauflage gebildet wird, wodurch ein sicheres Übereinanderstapeln der Werkstücke erzielt wird.

Gemäß einer Ausgestaltung des Verfahrens ist das Abstapelelement als zumindest ein Abstützelement an dem Werkstück vorgesehen. Sofern beispielsweise ein auf dem Werkstück aufgebrachtes Funktionselement einen Bolzen, eine Erhöhung oder eine aufgebogene Lasche darstellt, kann als Abstapelelement zumindest ein Abstützelement - beispielsweise in Form eines Bolzens oder Stiftes - vorgesehen sein, welches eine entsprechende Höhe aufweist, um mit der erhabenen Kontur und/oder Funktionselementen am Werkstück eine Drei- oder Mehrpunktauflage zu bilden, um die Werkstücke verkippungsfrei übereinander zu stapeln.

Das zumindest eine als Abstapelelement ausgebildete Abstützelement wird gemäß einer Ausführungsform der Erfindung unmittelbar an oder auf dem Werkstück mit einer Sollbruchstelle aufgebracht. Eine solche Sollbruchstelle kann beispielsweise eine sogenannte schwache Schweißstelle sein, wodurch das Abstützelement, insbesondere ein Bolzen, durch eine Schweißverbindung mit dem Werkstück temporär verbunden wird, sodass eine Stapelbarkeit ermöglicht wird. Ein einfaches Lösen des Abstützelementes wird aufgrund der Sollbruchstelle vom Werkstück ermöglicht. Dies kann beispielsweise in Form einer Knickbewegung, Schwenkbewegung oder dergleichen erfolgen, die vorzugsweise von Hand durchgeführt werden kann.

Bevorzugt wird das Abstützelement mit einer Höhe entsprechend dem höchsten, gegenüber der Werkstückoberfläche erhabenen Funktionselement ausgebildet. Dadurch können die einzelnen plattenförmigen Werkstücke horizontal ausgerichtet übereinanderliegend gestapelt werden.

Gemäß einer alternativen Ausführungsform des Verfahrens wird als Abstapelelement zumindest ein Anbindungselement ausgebildet, welches mit einer Microjoint-Verbindung als Sollbruchstelle mit dem Werkstück verbunden wird. Ein solches Anbindungselement kann aus dem plattenförmigen Material ausgebildet sein, aus welchem das Werkstück hergestellt wird. Dieses Anbindungselement kann an einem äußeren Randbereich einer Stirnkante des Werkstücks vorgesehen sein. Dieses Anbindungselement kann auch in einer Ausnehmung im Werkstück vorgesehen sein. Bei diesem Verfahren wird das Anbindungselement außerhalb der herzustellenden Werkstückgeometrie über die zumindest eine Sollbruchstelle angebracht. Bei einem solchen Anbindungselement kann es sich beispielsweise um eine Lasche oder dergleichen handeln. Durch die Anbindung über eine Sollbruchstelle, insbesondere einen Microjoint, kann dieses Abstützelement nach Bedarf wiederum von Hand von dem Werkstück gelöst werden, sodass das Werkstück seine gewünschte Geometrie und/oder Form aufweist.

Das als Abstapelelement ausgebildete Anbindungselement wird bevorzugt mit einem Abstützelement versehen. Dies weist wiederum den Vorteil auf, dass bei einzelnen inhomogen an dem Werkstück angeordneten Funktionselementen oder Erhöhungen zumindest ein weiterer Auflagepunkt durch die Anbindung des Abstützelementes auf dem Anbindungselement ermöglicht wird.

Eine weitere alternative Ausgestaltung sieht vor, dass das Anbindungselement, welches über eine Sollbruchstelle mit dem Werkstück verbunden ist, gegenüber der Werkstückebene aufgestellt, aufgebogen oder abgekantet wird. Dadurch kann das Anbindungselement gleichzeitig auch das Abstützelement bilden. In diesem Fall sind das Anbindungselement und das Abstützelement einteilig ausgebildet. Beispielsweise kann das Anbindungselement ausgehend von der Sollbruchstelle eines plattenförmigen Werkstücks U-förmig gebogen sein, sodass ein Schenkel, der parallel zur Werkstückoberfläche ausgerichtet ist, eine Auflagefläche bildet.

Alternativ kann das Anbindungselement mit zumindest einer Durchbrechung ausgebildet werden, sodass beim Abstapeln des oberen Werkstücks auf das untere Werkstück beispielsweise ein Abstützelement des unteren Werkstücks in die Durchbrechung des Anbindungselements am oberen Werkstücks eingeführt oder ein Bolzen eines Zwischenlagerplatzes oder Depots durch die Durchbrechung hindurchgeführt wird. Sofern beispielsweise an dem Werkstück oder einem an dem Werkstück vorgesehenen Anbindungselement ein Abstützelement vorgesehen ist, kann das Abstützelement beim Übereinanderstapeln der Werkstücke in die Durchbrechung des Anbindungselementes des darüber gestapelten Werkstückes eingreifen. Dadurch ist eine Art Verschachtelung ermöglicht. Die Werkstücke selbst können unmittelbar aufeinanderliegen. Die übereinandergestapelten Bauteile sind zueinander gefangen und gegen Verrutschen gesichert.

Des Weiteren wird das Abstützelement bevorzugt als ein Bolzen, insbesondere Schweißbolzen, ein Stift oder dergleichen ausgebildet. Dies stellt eine einfache Ausgestaltung für ein solches Abstützelement dar. Zudem ist durch eine Verschweißung mit dem Werkstück oder mit einem zusätzlichen Anbindungselement eine einfache Befestigung ermöglicht, die anschließend auch nach Bedarf wieder lösbar ist.

Eine weitere alternative Ausführungsform des Verfahrens sieht vor, dass beim versetzten Abstapeln von Werkstücken an dem oder den unteren der übereinander und versetzt gestapelten Werkstücken das zumindest eine Anbindungselement in der Länge und/oder in der Breite im Wesentlichen an die Größe des Überstandes des oder der darüber versetzt abgestapelten Werkstücke angepasst wird. Dadurch wird ein Kippen von versetzt übereinander gestapelten Teilen verhindert. Dies beruht darauf, dass die Anbindungselemente als Stützlaschen den sich durch das versetzte Abstapeln gebildeten Freiraum ausfüllen, sodass ein sicheres Stapeln dieser versetzt abgestapelten Werkstücke ermöglicht wird.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht einer Bearbeitungsmaschine für plattenförmige Werkstücke,
Figur 2 eine perspektivische Ansicht auf ein durch die Bearbeitung fertiggestelltes Werkstück,
Figur 3 eine perspektivische Ansicht des Werkstücks gemäß Figur 2 mit zumindest einem zusätzlich daran angebrachten Abstapelelement,
Figur 4 eine schematische Schnittansicht des Werkstücks gemäß Figur 3 entlang der Linie III-III in Figur 3,
Figur 5 eine perspektivische Ansicht einer alternativen Ausgestaltung des Werkstücks mit zumindest einem zusätzlichen Abstapelelement,
Figur 6 eine schematische Seitenansicht des Werkstücks gemäß Figur 5 in einer gestapelten Anordnung,
Figur 7 eine perspektivische Ansicht einer weiteren alternativen Ausgestaltung des Werkstücks mit zumindest einem zusätzlichen Abstapelelement,
Figur 8 eine perspektivische Ansicht eines weiteren alternativen Werkstücks mit zumindest einem zusätzlichen Abstapelelement,
Figur 9 eine perspektivische Ansicht von Werkstücken gemäß Figur 8 in einer gestapelten Anordnung,
Figur 10 eine perspektivische Ansicht einer weiteren alternativen Ausführungsform des Werkstücks mit zumindest einem Abstapelelement,
Figur 11 eine perspektivische Ansicht von versetzt übereinander gestapelten Werkstücken,
Figur 12 eine schematische Seitenansicht der Anordnung gemäß Figur 11, und
Figur 13 eine perspektivische Ansicht von versetzt zueinander gestapelten Werkstücken gemäß Figur 11, bei dem das zuletzt obenauf liegende Werkstück nicht dargestellt ist.

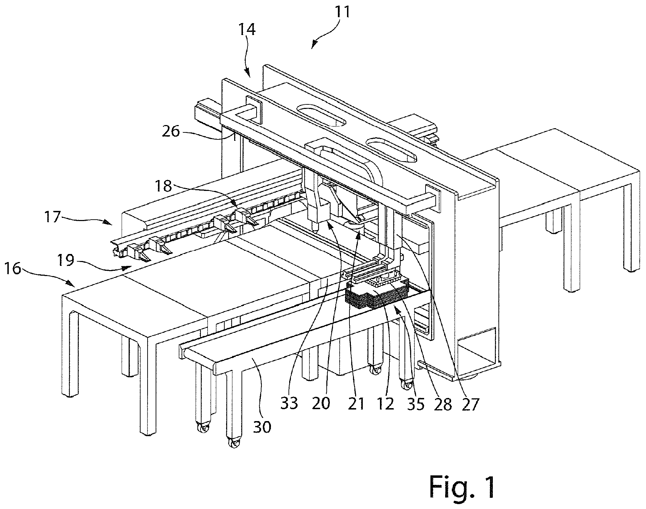

In Figur 1 ist perspektivisch eine Bearbeitungsmaschine 11 dargestellt. Diese Bearbeitungsmaschine 11 ist beispielsweise eine Hybridbearbeitungsmaschine. Diese Hybridbearbeitungsmaschine 11 ermöglicht sowohl eine Laserbearbeitung als auch eine Stanzbearbeitung von plattenförmigen Werkstücken. Alternativ kann die Bearbeitungsmaschine 11 auch nur eine Laserschneidbearbeitungsmaschine oder nur eine Stanzbearbeitungsmaschine sein. Diese Bearbeitungsmaschine 11 weist einen geschlossenen Grundkörper 14, insbesondere einen umlaufenden Rahmen, auf, der sich vorzugsweise in Y-Richtung erstreckt. Diesen Grundkörper 14 durchquert eine Werkstückauflage 16, welche sich in X-Richtung erstreckt. Parallel zur Werkstückauflage 16 erstreckt sich eine Halteeinrichtung 17, welche Halteelemente 18, 19, insbesondere erste Halteelemente 18 und zweite Halteelemente 19, aufweist. Vorzugsweise sind die Halteelemente 18, 19 als Klammern oder Klemmen ausgebildet. Durch diese Halteelemente 18,19 kann ein Werkstück 12 oder mehrere Werkstücke 12 gehalten werden. Das Werkstück 12 ist vorzugsweise als ein plattenförmiges Werkstück ausgebildet. Beispielsweise kann dieses in X-Richtung der Werkstückebene (X/Y-Ebene) verfahren werden. Zur Bearbeitung eines plattenförmigen Werkstücks 12 kann ein Laserbearbeitungskopf 20 und/oder ein Stanzbearbeitungskopf 21 entlang der Y-Achse innerhalb des Grundkörpers 14 verfahrbar angesteuert werden. Hierzu sind für den Laserbearbeitungskopf 20 und den Stanzbearbeitungskopf 21 jeweils unabhängig voneinander ansteuerbare und nicht näher dargestellte Linearantriebe vorgesehen.

Sofern die Bearbeitungsmaschine 11 einen Laserbearbeitungskopf 20 aufweist, ist in der Werkstückauflage 16 eine Auffangvorrichtung vorgesehen, welche sich in Y-Richtung erstreckt und unterhalb der Verfahrachse des Laserbearbeitungskopfes 20 vorgesehen ist.

Sofern die Bearbeitungsmaschine 11 einen Stanzbearbeitungskopf 21 aufweist, ist unterhalb der Werkstückauflage 16 ein Unterwerkzeug, insbesondere eine Stanzmatrize, vorgesehen, welche vorzugsweise entsprechend dem Stanzbearbeitungskopf 21, vorzugsweise in Y-Richtung, verfahrbar ist.

Die Bearbeitungsmaschine 11 weist an einer Stirnseite des Grundkörpers 14 eine Handlingseinrichtung 26 auf. Diese ist beispielsweise am Grundkörper 14 befestigt. Diese Handlingseinrichtung 26 umfasst eine Tragstruktur 27, welche zumindest eine Greifeinrichtung 28 aufnimmt. Die Greifeinrichtung 28 kann mechanische, elektromechanische Greifer oder auch Saugelemente umfassen, die vorzugsweise selektiv ansteuerbar sind. Durch diese Handlingseinrichtung 26 ist die zumindest eine Greifeinrichtung 28 oberhalb der Werkstückauflage 16 verfahrbar vorgesehen, um das Werkstück 12, insbesondere ein plattenförmiges Rohmaterial und/oder einen Zuschnitt, der Bearbeitungsmaschine 11 zuzuführen und auf der Werkstückauflage 16 aufzulegen.

Die Handlingseinrichtung 26 ermöglicht des Weiteren, durch die Bearbeitungsmaschine bearbeitete Werkstücke 12 aufzunehmen und von der Werkstückauflage 16 zu entnehmen. Die bearbeiteten Werkstücke 12 können aus der Bearbeitungsmaschine 11 herausgeführt und in einem Magazin 30, einer Zwischenablage oder einem Behälter abgelegt werden. Die Werkstücke 12 werden in einem Stapel übereinander gestapelt.

Die Werkstückauflage 16 kann des Weiteren ein Tischsegment 33 aufweisen, welches gegenüber der Werkstückauflage 16 nach unten abklappbar ist. Die Handlingseinrichtung 26 kann die bearbeiteten Werkstücke, Restteile und/oder Abfallteile in einer Entladeposition auf dem Tischsegment 33 ablegen. Unterhalb dieses abklappbaren Tischsegments 33 sind ein oder mehrere Sammelbehälter vorgesehen. In diesen Sammelbehältern werden die nach unten ausgeschleusten Teile aufgenommen und gegebenenfalls sortiert.

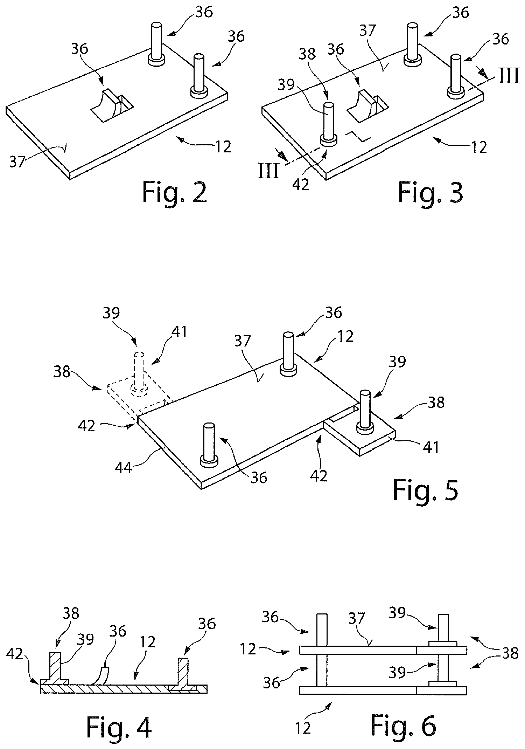

In Figur 2 ist perspektivisch ein Werkstück 12 dargestellt, welches in dieser Form benötigt wird. Dieses Werkstück 12 ist ein Zwischenprodukt oder ein Endprodukt. Es besteht beispielsweise aus einem ebenen plattenförmigen Material. Auf diesem Werkstück 12 sind beispielsweise zwei Funktionselemente 36 vorgesehen, welche gegenüber einer ebenen Werkstückoberfläche 37 des Werkstücks 12 erhaben sind. Bei diesen Funktionselementen 36 kann es sich beispielsweise um einen Bolzen oder ein Schraubgewinde handeln. Diese Funktionselemente 36 sind bevorzugt durch eine Schweißverbindung an dem Werkstück 12 befestigt, sodass eine dauerhafte Verbindung vorgesehen ist, welche die erforderliche Haltekraft zwischen dem Funktionselement 36 und dem Werkstück 12 aufweist.

Alternativ zu den als Bolzen ausgebildeten Funktionselementen 36 kann das bereitzustellende und bearbeitete Werkstück 12 auch Erhöhungen gegenüber der plattenförmigen Werkstückebene durch aufgebogene Laschen oder Abkantungen aufweisen, die gegenüber einer ebenen Werkstückoberfläche 37 erhaben sind. Dies können beispielsweise auch Kiemen in einem plattenförmigen Werkstück 12 sein, welche durch eine Scher-/Schneidbearbeitung hergestellt werden. Alternativ können auch sogenannte Warzen, topfförmige Erhöhungen oder dergleichen in dem Werkstück 12 eingebracht werden, welche solche Funktionselemente 36 bilden.

Sofern nur ein oder zwei Funktionselemente 36 im Werkstück 12 vorgesehen oder mehrere Funktionselemente 36 inhomogen auf dem Werkstück 12 verteilt angeordnet sind, kann ein Übereinanderstapeln von solchen Werkstücken 12 nicht erfolgen, da diese zueinander verkippen, verrutschen und/oder herunterfallen.

Um beispielsweise ein in Figur 2 dargestelltes Werkstück 12 stapelbar auszugestalten, kann zumindest ein zusätzliches Abstapelelement 38 an dem Werkstück 12 angebracht werden. Dies ist beispielsweise in Figur 3 dargestellt. Das Abstapelelement 38 kann gegenüber den beiden Funktionselementen 36 derart ausgerichtet und auf dem Werkstück 12 angeordnet sein, dass beim Übereinanderstapeln der Werkstücke 12 eine stabile Dreipunktauflage ermöglicht ist. Dieses zusätzliche Abstapelelement 38 ist in dieser Ausführungsform als ein zusätzliches Abstützelement 39 vorgesehen. Beispielsweise kann es sich um dieselbe Ausgestaltung wie das Funktionselement 36 handeln. Alternativ kann das Abstützelement 39 auch lediglich als ein Bolzen oder Stift ausgebildet sein, der nach dessen Anbringung am Werkstück 12 dieselbe Höhe wie die Funktionselemente 36 aufweist. Alternativ zu der in Figur 3 dargestellten Ausführungsform können auch zwei oder mehrere Abstützelemente 39 als Abstapelelemente 38 auf dem Werkstück 12 vorgesehen sein, um eine Vier- oder Mehrpunktauflage zu bilden. Dies ist auch abhängig von der Geometrie beziehungsweise dem Zuschnitt des Werkstücks 12.

In Figur 4 ist eine schematische Schnittansicht entlang der Linie III-III in Figur 3 dargestellt. Durch diese Schnittansicht wird verdeutlicht, dass die Anbindung des Funktionselementes 36 zum Werkstück 12 anders ausgebildet ist als die Anbindung des Abstapelelementes 38, insbesondere des Abstützelementes 39, zum Werkstück 12. Die Funktionselemente 36 sind beispielsweise durch eine feste Schweißverbindung mit dem Werkstück 12 verbunden, sodass eine tragfähige Schweißverbindung hergestellt wird, die für eine dauerhafte Verbindung des Funktionselements 36 mit dem Werkstück 12 vorgesehen ist. Bei dem Abstützelement 39 ist hingegen eine Schweißverbindung mit einer Sollbruchstelle 42 vorgesehen. Eine solche Schweißverbindung kann durch eine gezielte Einstellung der Schweißparameter gebildet werden. Dabei wird nur eine partielle stoffschlüssige Verbindung geschaffen. Dann kann beispielsweise das Abstützelement 39 manuell gegenüber dem Werkstück 12 gelöst werden. Dadurch kann nach dem Erfordernis der Stapelbarkeit vor oder nach einem Folgeprozess oder spätestens vor der Fertigstellung des Gutteils dieses zusätzlich aufgebrachte Abstapelelement 38 in einfacher Weise wieder von dem Werkstück 12 entfernt werden.

In Figur 5 ist eine alternative Ausführungsform eines Werkstücks 12 dargestellt. Bei dieser Ausführungsform sind beispielsweise die beiden Funktionselemente 36 diagonal zueinander ausgerichtet. Ein solches Werkstück 12 mit einem rechteckförmigen Zuschnitt und zwei diagonal dazu ausgerichteten Funktionselementen 36 ist wiederum nicht stapelbar.

Gemäß einer ersten Ausführungsform können zusätzliche Abstapelelemente 38 in Analogie zu Figur 3 vorgesehen sein. Anhand des Ausführungsbeispiels gemäß Figur 5 ist eine alternative Ausführungsform zur Ausbildung des zumindest einen Abstapelelementes 38 dargestellt. Bei dieser Ausführungsform besteht das Abstapelelement 38 aus einem zusätzlichen Anbindungselement 41 und bevorzugt einem Abstützelement 39. Das Anbindungselement 41 kann plattenförmig ausgebildet sein und ist vorteilhafterweise über eine Sollbruchstelle 42, insbesondere in Form eines Microjoints, an dem Werkstück 12 angebunden. Solche Microjoints sind einfach herzustellen und ermöglichen, dass das Abstapelelement 38 nach dem Gebrauch manuell entfernt werden kann. Das an dem Anbindungselement 41 vorgesehene Abstützelement 39 weist wiederum eine Höhe auf, die der Höhe der Funktionselemente 36 entspricht, um zumindest eine Dreipunktauflage zu bilden. Zusätzlich können zu dem zumindest einen Abstützelement 39 ein oder mehrere Abstapelelemente 38 an dem Werkstück 12 angebracht sein. Beispielsweise ist strichliniert ein zweites Abstapelelement 38 an dem Werkstück 12 vorgesehen. Dadurch wird beispielsweise bei der Ausführungsform in Figur 5 eine Vierpunktauflage ermöglicht.

Die Anbindung der Abstapelelemente 38 an das Werkstück 12 steht in Abhängigkeit der Anordnung der Funktionselemente 36 auf dem Werkstück 12 und/oder von der Werkstückgeometrie.

In Figur 6 ist eine schematische Seitenansicht von zwei übereinandergestapelten Werkstücken 12 mit Abstapelelementen 38 gemäß Figur 5 dargestellt. Daraus ist ersichtlich, dass die Werkstücke 12 sicher übereinander stapelbar sind.

Sofern beispielsweise die Funktionselemente 36 an dem Werkstück 12 gemäß Figur 2 angeordnet sind, kann entfernt dazu an jeweils einer Seitenkante oder Stirnkante ein Abstützelement 39 vorgesehen sein. Alternativ kann auch nur an einer Stirnseite 44 ein solches Abstützelement 39 vorgesehen sein, um dann eine Dreipunktauflage zu bilden.

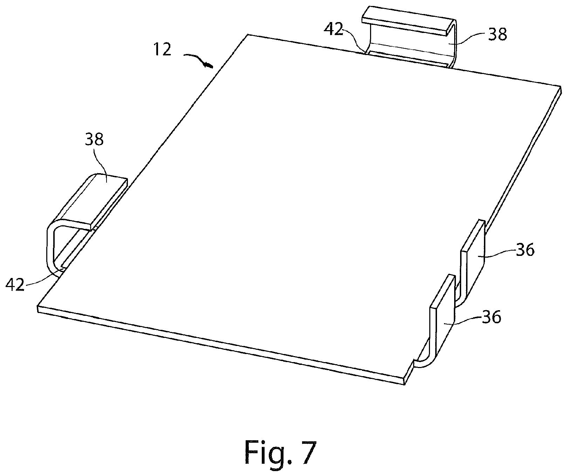

In Figur 7 ist perspektivisch eine weitere alternative Ausgestaltung eines Werkstücks mit daran angeordneten Funktionselementen 36 und Abstapelelementen 38 dargestellt. Das Werkstück 12 ist beispielsweise plattenförmig ausgebildet und weist am Randbereich ein oder mehrere Funktionselemente 36 auf, die beispielsweise als Laschen ausgebildet sind. Diese Laschen können gegenüber der Ebene des Werkstücks hervorstehen. Beispielsweise können diese Laschen um 90° abgewinkelt sein. Alternativ können auch Funktionselemente 36 vorgesehen sein, die anstelle einer L-förmigen Kontur eine S- oder U-förmige Kontur oder dergleichen aufweisen. Diese Funktionselemente 36 können an einer oder mehreren Stirnseiten des Werkstücks vorgesehen sein. Alternativ können diese auch innerhalb der Werkstückoberfläche 37 ausgebildet sein.

Zum Abstapeln solcher Werkstücke sind bevorzugt Abstapelelemente 38 vorgesehen, welche ein Anbindungselement 41 aufweisen, die über eine Sollbruchstelle 42 mit dem Werkstück 12 verbunden sind. Die Anbindungselemente 41 können dabei aufgebogen, abgekantet, aufgestellt sein. Dadurch bildet das Anbindungselement 41 gleichzeitig ein Abstützelement 39, ohne dass ein zusätzliches Element an dem Anbindungselement 41 angebracht wird, wie dies bei den vorherigen Ausführungsformen beschrieben ist. Ein solches Abstapelelement 38 kann beispielsweise eine U-förmige Kontur ausgehend von der Sollbruchstelle 42 aufweisen, sodass dadurch zusammen mit den Funktionselementen 36 zumindest eine Dreipunktauflage für ein darauf abzustapelndes weiteres Werkstück 12 gebildet ist.

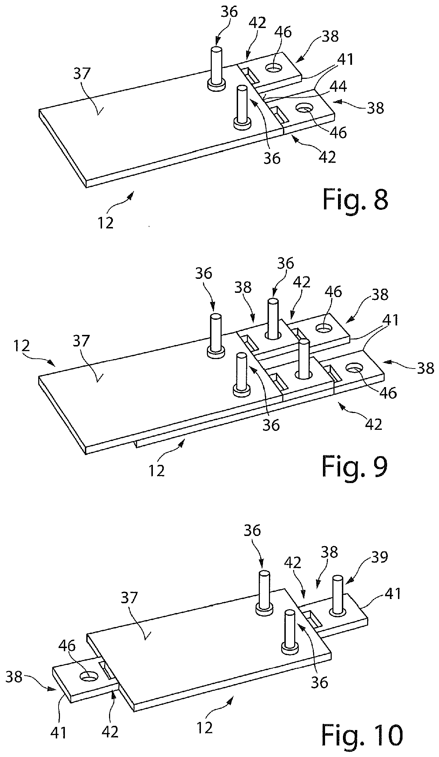

In Figur 8 ist eine weitere alternative Ausführungsform eines Werkstücks 12 mit Funktionselementen 36 und zumindest einem Abstapelelement 38 dargestellt. Sofern die Funktionselemente 36 in Form eines Stiftes oder eines Bolzens ausgebildet sind, können die Abstapelelemente 38 durch ein Anbindungselement 41 mit einer Durchbrechung 46 ausgebildet sein. Dadurch ist die Stapelbarkeit ermöglicht. Bevorzugt entsprechen die Größe und die Geometrie der Durchbrechung 46 der Größe und der Geometrie des Funktionselementes 36. Bei diesem Ausführungsbeispiel in Figur 8 sind einer Stirnseite 44 beispielsweise zwei Abstapelelemente 38 zugeordnet. Sofern solche in Figur 8 dargestellten Werkstücke 12 übereinander gestapelt werden, können diese einen gestapelten Zustand gemäß Figur 9 einnehmen. Dabei werden die Abstapelelemente 38 des oberen Werkstücks 12 zu den Funktionselementen 36 des unteren Werkstücks 12 ausgerichtet, sodass diese Funktionselemente 36 in die Durchbrechungen 46 der Anbindungselemente 41 des oberen Werkstücks 12 eingreifen können. Durch eine solche Ausgestaltung sind die Werkstücke 12 übereinander stapelbar und zusätzlich gegen Verrutschen gesichert.

In Figur 10 ist eine weitere alternative Ausführungsform eines Werkstücks 12 zu den vorgenannten Ausführungsformen dargestellt. Bei einem plattenförmigen Werkstück 12 mit einer Außenkontur und/oder Geometrie gemäß Figur 10 ist beim Übereinanderstapeln ein gegenseitiges Verrutschen nicht gesichert. Durch das zusätzliche Anbringen von dem zumindest einen Abstapelelement 38 kann die Stapelbarkeit und/oder ein Sichern gegen Verrutschen ermöglicht sein. Beispielsweise kann an einer Stirnseite 44 ein zusätzliches Abstapelelement 38 vorgesehen sein, welches ein Anbindungselement 41 sowie ein darauf angebrachtes Abstützelement 39 aufweist. Diesem gegenüberliegend kann ein davon abweichendes Abstapelelement 38 vorgesehen sein, welches ein Anbindungselement 41 mit einer Durchbrechung 46 aufweist. Zum Übereinanderstapeln können diese Werkstücke 12 um 180° verdreht zueinander und übereinanderliegend angeordnet werden. Das Abstützelement 39 ist dabei in der Höhe derart bemessen, dass dieses der Plattenstärke des Anbindungselementes 41 mit der Durchbrechung 46 entspricht.

Des Weiteren kann bei einem solchen Werkstück 12 gemäß Figur 10 nur eines der beiden Abstapelelemente 38 vorgesehen sein und zumindest eines der beiden Abstapelelemente 38 auch einer weiteren Funktion in einem Folgeprozess dienen. Beispielsweise kann das Abstapelelement 38 als Aufhängeteil eingesetzt werden, um beispielsweise das plattenförmige Material zu besprühen, lackieren und/oder beölen. Auch kann das Abstapelelement 38 zur Ausrichtung für einen weiteren Umformvorgang in einer weiteren Arbeitsstation dienen.

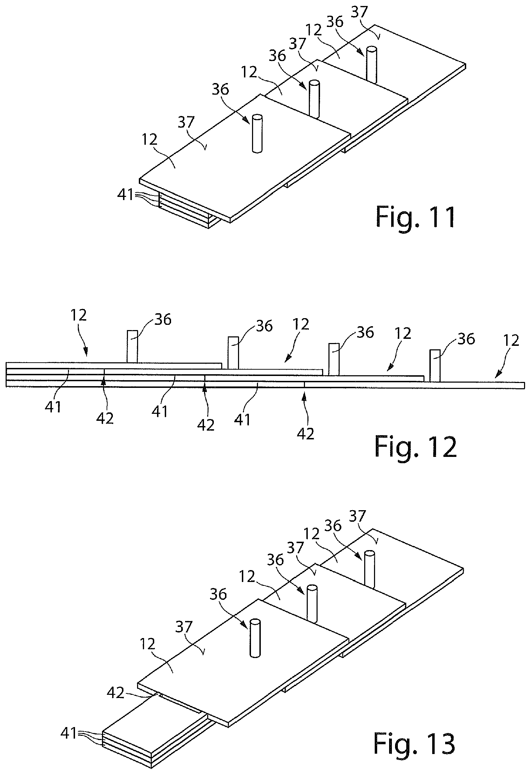

In Figur 11 ist eine perspektivische Ansicht von versetzt übereinander angeordneten und gestapelten Werkstücken 12 dargestellt. Dieses versetzte Abstapeln von Werkstücken 12 kann deshalb erforderlich werden, da ein oder mehrere Funktionselemente 36 in einem mittleren Bereich oder seitlichen Bereich der Werkstückoberfläche 37 des Werkstücks 12 vorgesehen sind. Zudem kann eine unsymmetrische Anzahl von Funktionselementen 36 vorgesehen sein. Dadurch ist ein Abstapeln der Werkstücke 12 übereinander nicht möglich. Bei einem versetzt übereinander angeordneten Abstapeln können an den Werkstücken 12 Anbindungselemente 41 vorgesehen sein, die in Abhängigkeit der Höhe des Stapels und somit der Länge der aneinander gereihten und übereinander liegenden Werkstücke 12 angepasst sein können. Dies geht beispielsweise aus Figur 12 hervor. Das unterste Werkstück 12 der übereinander gestapelten Werkstücke 12 weist ein Anbindungselement 41 auf, welches sich bis zu einem stirnseitigen Ende des obersten Werkstücks 12 erstreckt. Die dazwischen angeordneten Werkstücke 12 weisen eine Länge des Anbindungselementes 41 auf, welche um den Versatz gegenüber dem darunterliegenden Werkstück 12 verkürzt ist.

In Figur 13 ist beispielsweise die Anordnung der Werkstücke 12 gemäß Figur 10 dargestellt, wobei das oberste abgestapelte Werkstück 12 noch nicht abgestapelt ist. Dadurch ist ersichtlich, dass das oder die Anbindungselemente 41 mittels einer Sollbruchstelle 42 an dem Werkstück 12 angebunden sind. Die Sollbruchstelle 42 kann auch eine analoge Ausführungsform zu den vorbeschriebenen Beispielen umfassen.

Vorteilhafterweise ist die Breite des Anbindungselementes 41 derart ausgebildet, dass ein seitliches Verkippen der abgestapelten Werkstücke 12 verhindert ist. Die Anbindungselemente 41 unterfüttern somit den Freiraum, der beim versetzten Abstapeln entstehen würde, um ein sicheres Abstapeln der Werkstücke 12 zu ermöglichen.

## Patentansprüche

1. Verfahren zur Aufbereitung von Werkstücken (12) aus einem plattenförmigen Material, insbesondere Blech, für ein automatisiertes Abstapeln, mit einer Bearbeitungsmaschine (11), welche eine Werkstückauflage (16) und zumindest ein Bearbeitungswerkzeug (20, 21) zum Bearbeiten des auf der Werkstückauflage (16) aufliegenden Werkstücks (12) aufweist und mit einer Handlingseinrichtung (26), durch welche das Werkstück (12) von der Werkstückauflage (16) entnommen und in einem Magazin (30) abgestapelt oder an eine nachfolgende Arbeitsstation übergeben wird, und an dem Werkstück (12) zumindest ein zusätzliches Abstapelelement (38) angebracht wird, durch welches die Werkstücke (12) übereinander stapelbar sind und welches vor oder nach dem zumindest einen Folgeprozess oder nach dem Abstapeln der Werkstücke (12) von dem jeweiligen Werkstück (12) entfernt wird, **dadurch gekennzeichnet,**
- **dass** als Abstapelelement (38) zumindest ein Abstützelement (39) an oder auf dem Werkstück (12) vorgesehen wird, durch welches das eine Werkstück (12) verkippungsfrei über dem weiteren Werkstück (12) gestapelt wird und das Abstützelement (39) unmittelbar an oder auf dem Werkstück (12) mit einer Sollbruchstelle (42), welche als eine schwache Schweißstelle ausgebildet ist, aufgebracht wird oder
- **dass** als Abstapelelement (38) zumindest ein Anbindungselement (41) ausgebildet wird, welches mit einer Microjoint-Verbindung als Sollbruchstelle mit dem Werkstück (12) verbunden wird.

2. Verfahren nach Anspruch 1, **dadurch gekennzeichnet, dass** an dem Werkstück (12), welches inhomogen daran angebrachte oder angeformte Funktionselemente (36) aufweist, die gegenüber der Werkstückoberfläche (37) erhaben sind, das zumindest ein Abstapelelement (38) auf dem Werkstück (12) aufgebracht oder an das Werkstück (12) angrenzend angebracht wird.

3. Verfahren nach Anspruch 1, **dadurch gekennzeichnet, dass** das Abstützelement (39) mit einer Höhe entsprechend dem höchsten, gegenüber der Werkstückoberfläche (37) erhabenen Funktionselement (36) ausgebildet wird.

4. Verfahren nach Anspruch 1, **dadurch gekennzeichnet, dass** auf dem Anbindungselement (41) zumindest ein Abstützelement (39) aufgebracht wird.

5. Verfahren nach Anspruch 1, **dadurch gekennzeichnet, dass** das Anbindungselement (41) gegenüber einer Werkstückebene aufgestellt, aufgebogen und/oder abgekantet wird und das Abstützelement (39) bildet.

6. Verfahren nach Anspruch 1, **dadurch gekennzeichnet, dass** das Anbindungselement (41) mit zumindest einer Durchbrechung (46) ausgebildet wird, sodass beim Abstapeln des oberen Werkstücks (12) auf das untere Werkstück (12) ein Abstützelement (39) des unteren Werkstücks (12) in die Durchbrechung (46) des oberen Werkstücks (12) eingreift oder ein Bolzen eines Magazins/Depots (30) durch die Durchbrechung (46) hindurchgeführt wird.

7. Verfahren nach einem der vorhergehenden Ansprüche, **dadurch gekennzeichnet, dass** das als Abstapelelement (38) ausgebildete Abstützelement (39) in Form eines Bolzens, insbesondere Schweißbolzens, ausgebildet wird.

8. Verfahren nach Anspruch 1, **dadurch gekennzeichnet, dass** beim versetzten Abstapeln von mehreren Werkstücken (12) an dem unteren der übereinander und versetzt gestapelten Werkstücke (12) das zumindest eine Anbindungselement (41) an dem Werkstück (12) in der Länge und/oder Breite im Wesentlichen an die Größe des Überstandes des oder der darüber versetzt gestapelten Werkstücke (12) angepasst wird.

## Claims

1. Method for preparing workpieces (12) made from a sheet-like material, in particular sheet metal, for automated stacking, comprising a machine tool (11), which has a workpiece support (16) and at least one machining tool (20, 21) for machining the workpiece (12) resting on the workpiece support (16), and comprising a handling device (26), by means of which the workpiece (12) is removed from the workpiece support (16) and stacked in a magazine (30) or transferred to a downstream workstation, and at least one additional stacking element (38) is attached to the workpiece (12), by means of which the workpieces (12) are stackable on top of one another and which is removed from the respective workpiece (12) before or after the at least one downstream process or after the workpieces (12) have been stacked, **characterised in that**
- as the stacking element (38) there is provided at least one supporting element (39) on or abutting the workpiece (12), by means of which the one workpiece (12) is stacked on top of the further workpiece (12) in a tilt-free manner, and the supporting element (39) is mounted directly on or abutting the workpiece (12) by means of a predetermined breaking point (42), which is designed as a weak welding point, or
- as the stacking element (38) there is formed at least one connecting element (41), which can be joined to the workpiece (12) by means of a micro joint connection as the predetermined breaking point.

2. Method according to claim 1, **characterised in that** on the workpiece (12), which has functional elements (36) that are attached thereto or are moulded on in a non-homogeneous manner and are raised with respect to the workpiece surface (37), the at least one stacking element (38) is mounted on the workpiece (12) or is attached so as to abut against the workpiece (12).

3. Method according to claim 1, **characterised in that** the supporting element (39) is designed with a height corresponding to the tallest functional element (36) that is raised with respect to the workpiece surface (37).

4. Method according to claim 1, **characterised in that** at least one supporting element (39) is mounted on the connecting element (41).

5. Method according to claim 1, **characterised in that** the connecting element (41) is positioned in a manner that is bent up and/or chamfered with respect to a workpiece plane and forms the supporting element (39).

6. Method according to claim 1, **characterised in that** the connecting element (41) is designed with at least one opening (46), such that when the upper workpiece (12) is stacked on the lower workpiece (12) a supporting element (39) of the lower workpiece (12) engages with the opening (46) of the upper workpiece (12) or a stud of a magazine/repository (30) is passed through the opening (46).

7. Method according to one of the preceding claims, **characterised in that** the supporting element (39) designed as the stacking element (38) is designed in the form of a stud, in particular a welding stud.

8. Method according to claim 1, **characterised in that**, where a plurality of workpieces (12) are stacked in an offset manner, on the lower of the workpieces (12) stacked on top of one another in an offset manner the length and/or width of the at least one connecting element (41) on the workpiece (12) is substantially matched to the size of the overhang of the workpiece(s) (12) stacked on top of it in an offset manner.

## Revendications

1. Procédé de préparation de pièces (12) à partir d'un matériau en forme de plaque, en particulier d'une tôle, pour un empilement automatique, avec une machine d'usinage (11), laquelle présente un porte-pièce (16) et au moins un outil d'usinage (20, 21) pour usiner la pièce (12) reposant sur le porte-pièce (16), et avec un dispositif de manutention (26), par lequel la pièce (12) est prélevée du porte-pièce (16) et est empilée dans un magasin (30) ou est transférée à un poste de travail qui suit, et au moins un élément d'empilement (38) supplémentaire est monté sur la pièce (12), par lequel les pièces (12) peuvent être empilées les unes au-dessus des autres et lequel est retiré de la pièce (12) respective avant ou après l'au moins un processus suivant ou après l'empilement des pièces (12), **caractérisé en ce**
- **qu'**est prévu en tant qu'élément d'empilement (38) au moins un élément de soutien (39) contre ou sur la pièce (12), par lequel une pièce (12) est empilée sans basculement au-dessus de l'autre pièce (12) et l'élément de soutien (39) est appliqué directement contre ou sur la pièce (12) avec un point de rupture théorique (42), lequel est réalisé en tant qu'un point de soudage faible, ou
- **qu'**est réalisé en tant qu'élément d'empilement (38) au moins un élément d'attache (41), lequel est relié à la pièce (12) avec une liaison à microjoint en tant que point de rupture théorique.

2. Procédé selon la revendication 1, **caractérisé en ce que** l'au moins un élément d'empilement (38) est appliqué sur la pièce (12) ou est monté de manière à jouxter la pièce (12) sur la pièce (12), laquelle présente des éléments fonctionnels (36) montés ou formés sur celle-ci de manière non homogène, qui sont rehaussés par rapport à la surface de pièce (37) .

3. Procédé selon la revendication 1, **caractérisé en ce que** l'élément de soutien (39) est réalisé avec une hauteur de manière à correspondre à l'élément fonctionnel (36) le plus haut rehaussé par rapport à la surface de pièce (37).

4. Procédé selon la revendication 1, **caractérisé en ce qu'**au moins un élément de soutien (39) est appliqué sur l'élément d'attache (41).

5. Procédé selon la revendication 1, **caractérisé en ce que** l'élément d'attache (41) est placé, courbé et/ou chanfreiné par rapport à un plan de pièce et forme l'élément de soutien (39).

6. Procédé selon la revendication 1, **caractérisé en ce que** l'élément d'attache (41) est réalisé avec au moins un ajour (46) si bien que lors de l'empilement de la pièce (12) supérieure sur la pièce (12) inférieure, un élément de soutien (39) de la pièce (12) inférieure vient en prise avec l'ajour (46) de la pièce (12) supérieure ou un boulon d'un magasin/dépôt (30) est guidé à travers l'ajour (46) de part en part.

7. Procédé selon l'une quelconque des revendications précédentes, **caractérisé en ce que** l'élément de soutien (39) réalisé en tant qu'élément d'empilement (38) est réalisé sous la forme d'un boulon, en particulier d'un boulon de soudage.

8. Procédé selon la revendication 1, **caractérisé en ce que** lors de l'empilement décalé de plusieurs pièces (12) sur la pièce inférieure des pièces (12) empilées les unes au-dessus des autres de manière décalée, la longueur et/ou la largeur de l'au moins un élément d'attache (41) sur la pièce (12) sont adaptées sensiblement à la taille de la saillie de la ou des pièces (12) empilées au-dessus de manière décalée.
